# EUROPEAN PATENT APPLICATION

(11) **EP 2 476 724 A1**
(43) Date of publication of application: **18.07.2012**
(21) Application number: 11000311.8
(22) Date of filing: 17.01.2011
(51) Int. Cl.: C08J 9/26, B01D 67/00

(54) **Pourous polymer membranes**

(71) Applicant: ETH Zurich, 8092 Zurich (CH)
(72) Inventor: Lüchinger, Norman, A., 8037 Zürich (CH); Stark, Wendelin, Jan, 8049 Zürich (CH); Kellenberger, Christoph, R., 8127 Forch (CH)

(57) **Abstract**

The invention relates to manufacturing processes for nano-porous polymer membranes as defined in the specification; to intermediates suitable to obtain such membranes; to polymer membranes as defined herein; to shaped articles containing such membranes; to the use of such membranes, shaped articles and intermediates.

## Description

The invention relates to manufacturing processes for porous polymer membranes; to intermediates suitable to obtain such membranes; to polymer membranes as defined herein; to shaped articles containing such membranes; to the use of such membranes, shaped articles and intermediates.

Nano-porous polymer membranes and corresponding manufacturing methods are already known. Typically, such membranes are obtained by a phase separation process, by stretching specific polymer foils or by a template based process. The known processes show certain disadvantages. While the first process is difficult to control, the second process is only applicable to specific starting materials. The third process is not yet in industrial application.

Johnson et al (Science 1999, vol.283, p.963 ff) disclose a template-based process; in this process, a pressed and sintered silica template is used to obtain a shaped polymeric article with pores in the range of 15-35 nm. This process is suited to obtain pellets, but not membranes.

Mikos et al (US5514378) disclose a template based process to obtain biocompatible membranes. The disclosed process requires long production times, making it unsuitable for industrial applications and / or continuous processes. Further, the pore size of the membranes obtained by this process may be varied only in a limited range, between 450 nm and 930 nm.

Eisen et al (WO2009/024973) disclose a number of phase separation processes for manufacturing specific polysulfone membranes. In one embodiment, a multi-step process is disclosed in which - in a first step - in a solution containing solvent and polysulfone, a low amount of Fe₂O₃ nanoparticles is introduced into the polymer matrix by the use of a magnetic field. Phase separation is then induced by immersion precipitation to create a porous membrane. In a last step Fe₂O₃-nanoparticles are removed out of the porous structure to increase flux and pore accessibility of the membrane. This process requires specific equipment and is applicable to specific combinations of starting materials only.

Consequently, there is a need for providing additional / improved manufacturing processes for nano-porous polymer membranes; there is also a need for new polymer membranes having beneficial properties.

Thus, it is an object of the present invention to mitigate at least some of these drawbacks of the prior art. In particular, it is an aim of the present invention to provide improved manufacturing processes for porous polymer membranes. It is a further aim to provide nano-porous polymer membranes which are suitable for advanced applications, such as in breathable textile materials and filters.

The present invention will be described in more detail below. It is understood that the various embodiments, preferences and ranges as provided / disclosed in this specification may be combined at will. Further, depending of the specific embodiment, selected definitions, embodiments or ranges may not apply. It is further understood that all references identified herein are incorporated by reference in its entirety.

The above objectives are achieved by providing a manufacturing process as defined in claim 1. Further aspects of the invention are disclosed in the specification and independent claims, preferred embodiments are disclosed in the specification and the dependent claims. The manufacturing process for nano-porous polymer membranes, as described herein, proves to be very versatile, reliable, simple to control. The process is particularly suitable for fast and low-cost production of large area membranes. Polymer membranes as described herein prove to be useful in applications as defined below and further enable the manufacture of improved articles and / or facilitate manufacture of articles as defined below.

As it will become apparent when reading this specification, the invention relates in a first aspect to a method for manufacturing polymer membranes; in a second aspect to intermediates suitable for manufacturing such polymer membranes; in a third aspect to novel polymer membranes; in a forth aspect to shaped articles comprising (i.e. containing or consisting of) such polymer membranes; and in a fifth aspect to uses of such membranes, shaped articles and intermediates.

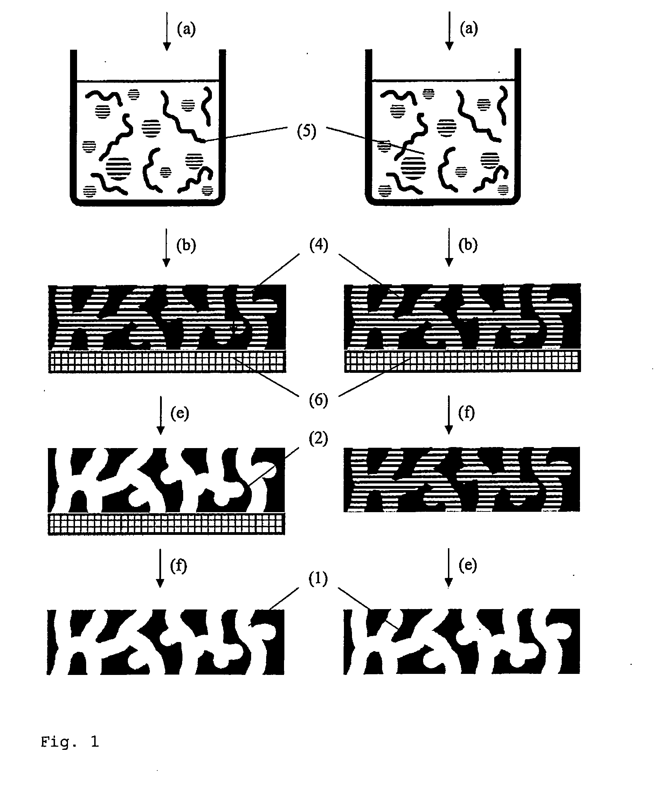

Further, the present invention will be better understood by reference to figure 1, which shows a schematic view of the inventive process, wherein process steps are as defined herein; wherein (1) represents the inventive porous membrane (unsupported; free-standing); (2) represents the inventive porous material, supported on a substrate (6); (4) represents a bi-continuous nano-structured network of a polymer and a salt, either unsupported ("free-standing") or supported on a substrate (6); (5) represents a dispersion comprising a dissolved polymer, diluent and metal salt nanoparticles.

Unless otherwise stated, the following definitions shall apply in this specification:
The term "nanoparticle" is known in the field and includes crystalline or amorphous materials. Nanoparticles are particles having a diameter in the submicron size range. Primary particle sizes are preferably between 5 - 400 nm. Suitable methods for the determination of primary particle size can be found by Limbach et al. (Environmental Science & Technology, 2005. 39(23): p. 9370-9376). Nanoparticles may be obtained from a range of preparation methods, including high temperature-gas phase processes (such as flame synthesis, laser processes and plasma processes), and liquid phase chemical methods (such as precipitation and sol-gel processes). Nanoparticles particularly suitable in the context of the present invention may be obtained by a flame spray synthesis (FSP) process.

The term "salt" is known in the field. A salt is defined as the product formed from the neutralisation reaction of acids and bases. Salts are ionic compounds composed of cations and anions so that the product is electrically neutral. Examples of salt classes are halogenides (chlorides, fluorides, bromides, iodides), sulfates, phosphates, carbonates, nitrates, particularly phosphates, carbonates and halogenides. In inorganic salts, the cation is a metal ion and the anion is a non-metal ion; specific examples of inorganic salts include calciumphosphate, calciumcarbonate, magnesiumsulfate, sodiumchloride. In the context of the present invention, metal oxides are not considered salts. Further, salts are preferably manufactured by a dry process, such as FSP.

The term "polymer" is known in the field. The term refers to a material of repeating structural units ("monomers"), particularly to synthetic polymers (comprising synthetic monomers). The term thus includes homo-polymers, co-polymers and blends thereof. The term further includes oligomers. Polymers may be cross-linked. Typically, amorphous polymers are soluble, while crystalline polymers are not.

The "specific surface area" of a material as described herein is the total air-polymer interface area per amount of polymer mass. This may be determined by nitrogen adsorption using the BET method (according to: Janssen et al, Journal of Applied Polymer Science 52, 1913, 1994). The BET method is widely used in surface science for the calculation of surface areas of solids by physical adsorption of gas molecules (e.g. Nitrogen molecules). The basic principle of the measurement is that a material with a high surface area can adsorb more molecular nitrogen on its surface (assuming a molecular monolayer).

The "porosity" of a material as described herein is the volumetric percentage of pores of the total material. Porosity can be determined by porosimetry, by measuring the apparent material density, BET analysis or by microscope images.

The "permeability" of a material as described herein is defined as the flux of a fluid (i.e. a liquid medium or a gaseous medium) through interconnected pores of the material. Permeability can be determined by measuring the liquid or gas volume which passes a defined membrane area in a defined time at an applied pressure. A typical measure of this flux is millilitre per square centimetre, per bar and minute ([ml/(cm²*bar*min)]).

In general terms, the present invention relates in a first aspect to a method of manufacturing a porous polymer membrane (1) comprising the steps of (a) providing a dispersion (5) containing (i) one or more diluents, (ii) one or more polymers dissolved therein, (iii) one or more metal salt nanoparticles dispersed therein; (iv) optionally one or more additives dissolved therein; (b) coating a substrate (6) with said dispersion; (c) optionally subjecting the obtained material (4) to a drying step; (d) optionally subjecting the thus obtained material to a polymerisation or cross-linking step; (e) removing said one or more metal salt particles by a dissolution step; (f) optionally removing the obtained polymer membrane from said supporting material (6). This process is illustrated in fig. 1, left hand side.

It is believed that the dissolution step (e) is a key element of the manufacturing process and also a key element to obtain the inventive polymer membranes. While the prior art uses as a starting material a combination of a polymer, a solvent and a non-solvent, the present invention uses as a starting material polymer(s), a solvent(s) and metal salt nanoparticles and selectively removes the metal salt to obtain the porous polymer membrane. This is considered advantageous, as chemical properties of metal salts and polymer significantly differ enabling a wide choice of combinations and process steps.

The manufacturing processes as described herein are considered advantageous, as the individual steps a) to f) are known in industry and already in commercial use. Further, the process described is very fast and may be implemented in a continuous process.

It was surprisingly found, that the use of nanoparticulate metal salts provides an improved process which, on the one hand, provides suitable pores in the membrane and on the other hand, provides an improved manufacturing rate. This is unexpected, as the skilled person (i) would not expect the dissolution of nanoparticulate material from a polymer film because nanoparticles are expected to be individually coated by polymer and thus protected from dissolution.

This aspect of the invention shall be explained in further detail below, whereby the process steps are described first and suitable materials are described afterwards:
Step a: A dispersion (5) containing a mixture of metal salt(s) nanoparticles, diluent(s), polymer(s) and optionally additives is provided first. Typically, the amount of diluent is at least 50 wt.%, preferably at least 80wt.%, most preferably at least 90wt.% of the dispersion. Such comparatively high amount of solvent ensures low viscosity and thereby thin film formation during the coating step. Typically, the ratio of polymer : nanoparticles (wt.%) is in the range of 2:1 to 0.2:1, preferably 1.25:1 to 0.25:1, most preferably 1.1:1 to 0.7:1. Such comparatively high amount of nanoparticles ensures proper pore formation within the manufactured membranes. Without being bound to theory, it is believed that a lower amount will not provide interconnecting necks, while a higher amount will cause the coating to collapse.
   It was surprisingly found that the inventive process provides very good results without the addition of additives (particularly without the addition of surfactants) to the dispersion (5). Thus, in an advantageous embodiment, no additives (particularly no surfactants) are added to dispersion 5. In one embodiment, dispersion (5) consists of metal salt(s) nanoparticles, diluent(s) and polymer(s).
Step b: The dispersion of step a) is applied to a substrate, e.g. by using conventional printing or coating methods. This results in a metal salt / polymer nanocomposite film (4) on said substrate (6). Suitable methods are known in the field and include spraying, roll-to-roll processes, dip-coating.
Step c: Afterwards, e.g. for faster solvent evaporation, the nanocomposite films may be subjected to a heat treatment (e.g. drying) to obtain a polymer film containing nanoparticles. The temperatures and treatment times may vary, depending on the starting materials (particularly the diluent) and are typically below 200°C and preferably below the melting point of the polymer.
Step d: The coated material of step b) may be subjected to a polymerisation and/or cross-linking step. This step is optional and may be applied when appropriate starting materials are used. Particularly in case the polymer comprises oligomers and/or monomers that may be polymerised, optionally in the presences of an initiator (polymerisation); or in case the polymer comprises groups that may be crosslinked, optionally in the presence of a cross-linking agent (cross-linking step). Step d) and step c) may take place simultaneously or in subsequent steps.
Step e: The continuous salt phase in such nanocomposite membranes is dissolved which results in a nano-porous polymer film (the porous polymer membrane) on a substrate. Suitable are particularly aqueous solvents, such as water or acidic aqueous solutions. The choice of solvent particularly depends on the type of metal salt used.
   The solvent in step e) is selected to ensure dissolution of the metal salt nanoparticles without dissolving the polymer.
Step f: The substrate may be easily removed from the porous material, e.g. by pealing off (to obtain (1)) or by transfer to another substrate (to obtain (1)). This removal step may take place after to the washing step (e)(as outlined above) or prior to the washing step (e)(as outlined below). Step (f) may be performed using processes known per se. The removal step f), aims to remove substrate (6) to obtain an unsupported porous material (1) or to transfer the porous material to another supporting material to obtain a coated article.

In an alternative embodiment the invention provides a method as described herein, wherein said step (f) is performed prior to step (e), as illustrated in fig. 1, right hand side. Consequently, the invention also relates to a method of manufacturing a polymer membrane (1) comprising the steps of (a) providing a dispersion (5) as described herein; (b) coating a substrate (6) with said dispersion; (c) optionally subjecting the obtained material (4) to a drying step; (d) optionally subjecting the thus obtained material to a polymerisation or cross-linking step; (f) removing the obtained material (4) from said supporting material (6) (e) removing said one or more metal salt particles by a dissolution step thereby obtaining the polymer membrane (1).

Suitable solvents may be selected from a broad range of known solvents and combinations thereof. Examples include organic solvents selected from the group consisting of alcoholes, ethers, ketones, esters, halogenalkanes, alkanes, cycloalkanes, sulfoxides, amides, pyrrolidones, lactames.

Suitable polymers may be selected from a broad range of known polymers and combinations thereof. In an advantageous embodiment, the polymers are selected from the group of amorphous polymers. Suitable polymers thus include polysulfones, polyethersulfones, polycarbonates, polystyrenes, polyacrylates, polysiloxanes, polyarylates, and polyurethanes. The invention also includes the use of co-polymers and mixtures of polymers ("blends").

Suitable metal salt nanoparticles may be selected from a broad range of known metal salts and combinations thereof. Preferably, the metal salt particles are selected from the group consisting of Carbonates (including Hydrogencarbonates), Sulphates, Halogenides, Nitrates and Phosphates, preferably Carbonates. Examples include CaCO₃, BaCO₃, SrCO₃, Na₂CO₃, K₂CO₃, NaCl.
Preferably, the metal salt particles have a particle size of 5 - 400 nm, preferably 15 - 200 nm.
Preferably, the metal salt particles are made by a dry process, particularly by an FSP process.
Preferably, the metal salts are prepared prior to step a) in a separate process. The invention thus also relates to a method as described herein, wherein the nanoparticles are not prepared in situ.
Preferably, the metal salt particles are selected from the group consisting of Carbonates (including Hydrogencarbonates) and the process is a continuous process (as described below). It was surprisingly found that a continuous manufacturing process of porous membranes may be realized when using such Carbonates as the starting material. This may be attributed to the particularly fast dissolution and complete removal of carbonates in aqueous (or acidic) solutions

Suitable additives may be selected from a broad range of known additives and mixtures thereof and are known in the field.

Suitable substrates may be selected from a broad range of known substrates. The substrate may be any support compatible with the manufacturing process; particularly, it needs to be inert towards the solvents used. It is further beneficial, if the coating adheres to the substrate during manufacturing and can be removed after manufacturing. Suitable materials for a substrate include polymer materials (preferably semi-crystalline or crystalline), glasses, metals and ceramics (in each case coated or uncoated).

Suitable dispersions may be prepared from the above starting materials using known techniques. Preferred dispersions contain from 50 to 99 wt.-% diluents and/or from 1 to 20 wt.-% polymers and/or from 0.5 to 40 wt.-% metal salt particles and/or from 0 to 5 wt.-% additives as defined herein. It was found suitable to combine the starting materials by vigorously stirring the components and/or subjecting the components to ultrasonic treatment.

In a further embodiment, inventive method provides a process for manufacturing polymer membranes without using a phase separation process / phase separation step. Such phase separation is limited to specific polymers and the corresponding pore formation is highly sensitive to various process parameters (e.g. temperature, humidity, time) which need to be carefully controlled simultaneously. It is apparent that such process is disadvantageous for fast and large-scale commercial manufacturing. Thus, the invention also provides a method as described herein, which does not involve a phase separation step. In the context of this invention, a phase separation step is considered a separate step in a manufacturing process that requires specific equipment. It is also noted that phase inversion is only observed for a limited number of polymers / combination of polymers. The present invention is not limited to such specific polymers or combinations thereof and thus considered much more versatile.

In a further embodiment, inventive method provides a process for manufacturing polymer membranes without using a stretching process / stretching step. Such stretching is limited to specific polymers and typically applied to a foil to obtain a membrane. Such additional step is difficult to control and thus disadvantageous for commercial manufacturing. Thus, the invention also provides a method as described herein, which does not involve a stretching step.

In a further embodiment, the invention provides a method of manufacturing a polymer membrane (1) as described herein comprising the step of subjecting a shaped article (containing substrate (6) and coating) to a dissolution step (e) and optionally removing from the thus obtained shaped article said support (step f). The dissolution step (e), as outlined above, aims to remove all or essentially all salt material from said article. The removal step (f), as outlined above, aims to remove substrate (6) to obtain an unsupported porous material (1) or to transfer the porous material to another supporting material to obtain a coated article.

In a further embodiment, the invention provides a method of manufacturing a polymer membrane (1) as described herein, consisting of the steps (a) providing a dispersion (5) as described herein; (b) coating a substrate (6) with said dispersion; (c) subjecting the obtained material (4) to a drying step (to remove the diluent); (e) subjecting the obtained material to a dissolution step (to remove the one or more metal salt particles); (f) removing the obtained polymer membrane from said supporting material (6) (to obtain the porous polymer membrane (1)).

In a further embodiment, the invention provides a process as described herein, wherein one or more, preferably all steps a) to f) are adapted to a continuous process, such as a Roll-To-Roll-process (R2R process).

In a further embodiment the process step e), may be repeated. This measure ensures a complete removal of metal salt nanoparticles. Thus, step e) also includes multiple washings and dryings. When using a multi-step protocol, either the same or different solvents may be used, for example a diluted aqueous acid first, followed by water. The manufacturing process described provides porous materials in virtually unlimited size. As the manufacturing steps a) to e) do not provide a limitation regarding the size of the material (except for the equipment used) large sheet materials, in terms of length and width, are obtainable. Thus, the invention also provides a process as disclosed herein, wherein the polymer membrane has an area of more than 100cm2, preferably more than 400 cm2.

By suitable selection of metal salt particles (size and amount) and by the selection of process parameters (such as coating thickness, drying time) porosity and pore size distribution may be varied over a broad range. Thus, the invention also provides a process as disclosed herein, wherein the polymer membrane has a porosity of 10 - 90%, preferably above 25% such as 28%. Thus, the invention also provides a process as disclosed herein, wherein the polymer membrane has a pore size of 5-400 nm, preferably 15-200 nm.

The present invention relates in a second aspect to intermediates or starting materials which are useful in a manufacturing process as described herein. This aspect of the invention shall be explained in further detail below:
In one embodiment, the invention relates to a dispersion (5) comprising (i.e. containing or consisting of) 40-99 wt% diluent; 1-20 wt% polymer; 0.5-40 wt% metal salt nanoparticles; and 0-5 wt% of additives. Such dispersions are suitable starting materials for the inventive process as described below. The individual components of the inventive dispersions are known per se, suitable components are identified above, in the context of the "first aspect". Particularly suitable components are identified below:
   Diluent: Any liquid carrier suitable for dispersing the nanoparticles and dissolving the polymer may be used; preferred are the diluents identified above. The amount of diluent may vary over a broad range, depending on the
      intended following manufacturing step (such as spraying, coating or printing).
   Polymers: Suitable polymers include polymers that are soluble in the diluent identified above, such as amorphous polymers as described herein, polymers that may be cross-linked, oligomers that may be polymerized.
   Metal salt nanoparticles: In a broad sense, any metal salt nanoparticles may be used in the inventive dispersion. It was found advantageous to use pre-manufactured nanoparticles, while in situ formation of nanoparticles is less preferred. The manufacture of suitable nanoparticles is known in the field. It was found that nanoparticles made by a dry process, such as an FSP process, are particularly suitable.
   Additives: Additives may be selected from the group consisting of surfactants, polymerisation initiators, stabilizers, cross-linking agents, wetting agents.

In certain embodiments, it was found the dispersion (5) has a shelf life of less than one day; particularly, as the nanoparticles separate from the diluent. The dispersions are nevertheless suitable for the inventive process but may be pre-treated prior to use (e.g. by sonication). The invention thus relates to both, a dispersion as defined herein and a kit of parts, wherein a first part comprises (i.e. contains or consists of) metal salt nanoparticles as described herein and said second part comprises (i.e. contains or consists of) diluent, polymer and additives as described herein.

In a further embodiment, the invention relates to a material (4) comprising a substrate (6) and a coating, wherein said coating (i) contains metal salt nanoparticles, polymer(s), diluent(s) and optionally additive(s), each as defined herein; (ii) said nanoparticles are randomly distributed within said coating; (iii) and said coating has a thickness (d) between 0.05 - 50 µm. The material (4) may be obtained by coating / printing a suspension (5) on a substrate (6), optionally followed by removing the above mentioned dispersing medium.

The present invention relates in a third aspect to novel polymer membranes and to shaped articles comprising such polymer membranes; this aspect of the invention shall be explained in further detail below.

In one embodiment, the invention relates to a polymer membrane, said polymer (i) is selected from the group consisting of polymers soluble in organic solvents and cross-linked polymers thereof; (ii) has pores with a diameter between 5 - 400 nm; (iii) has a thickness of 0.05 - 50 µm. Due to the unique manufacturing process, as outlined herein, the present invention provides nanoporous membranes combining specific porosity and thickness for organic polymers.

Advantageous polymers and characteristics of the inventive membranes are outlined below.
Polymers: As outlined above, a wide variety of polymers may be used for the inventive membranes. This is considered advantageous, as the presently known polymer membranes are limited in view of the materials suitable and / or the characteristics of its pores. Suitable polymers may be selected from the group of polymers soluble in organic solvents and include Polyesters, Polyethers, Polysulfones, Polyethersulfones, Polycarbonates, Polyacrylates, Polystyrenes, Polysiloxanes such as PSU, PES, PPSU, PC, PMMA, PS, PDMS.
Pores: As outlined above, the inventive material is porous. The inventive material is characterized by the size, type and amount of pores present. The size and type and amount of pores may be influenced by the starting materials, the ratio metal salt nanoparticles : polymer, the manufacturing process.
Size: The size of the pores of the inventive membranes (defined by the diameter of the salt nanoparticles) is in the nanoscale range, typically between 5nm - 400nm, preferably 15 - 200 nm. The size of the pores may be determined by microscopy. Further, the pore size distribution may be precisely adjusted, due to the starting materials used.
Amount: The porosity, i.e. the volume of pores in relation to the volume of the membrane in total, may be varied in a broad range. Inventive materials show porosity in the range of 10-90 vol-%, preferably 20-90 vol-%, much preferred above 25 vol-%, such as 28 vol-%. The porosity may be determined by BET.
Type: The pores of the material may be arranged in a way that the material is permeable, partly permeable or impermeable. If essentially all pores of the material have dead ends, the material is impermeable. In the contrary, if essentially all pores of the material have open ends, the material is considered permeable. Consequently, if a fraction of the pores has dead ends, the material is considered partly permeable. In an advantageous embodiment, the present invention provides polymer membranes, wherein at least 90 % of said pores are interconnected.
Thickness: The thickness of the inventive membranes may be varied over a broad range. Inventive membranes show a thickness between 50nm - 50'000nm, preferably 300nm - 10'000nm, such as 1000nm. Such membranes may also be termed "sheet material" or "porous foils"; these terms indicate that the material has a length and width which is at least one magnitude larger (preferably two magnitudes larger) than the thickness of the material.

In a further embodiment, the invention relates to a polymer membrane as described herein which is impermeable to biologic material, including bacteria, viruses, cells, and/or impermeable to inorganic material, including nanoparticles. In a further embodiment, the invention relates to a polymer membrane as described herein which permeable to liquids, (including water), gases (including air), and dissolved material (including metal ions and proteins). Typically, the cut-off of the inventive membranes is in the range of 5 - 400 nm, such as 20 nm. Typically, the flow of the inventive polymer membranes is in the range of 0.01 - 100ml/min/cm² @ 1bar, such as 0.2 ml/min/cm² @ 1bar.

In a further embodiment, the invention relates to a polymer membrane, particularly as described herein, obtainable by a process as described herein.

In a further embodiment, the invention relates to a polymer membrane, particularly as described herein, obtained by a process as described herein.

The present invention relates in a forth aspect to a shaped article comprising a polymer membrane as described herein. A wide variety of articles may be equipped with the inventive porous material. This aspect of the invention shall be explained in further detail below:
In one embodiment, the invention relates to a shaped article as described herein selected from the group consisting of (i) filters (preferably wherein said membrane is supported or unsupported); (ii) woven or non-woven textiles (wherein said membrane is laminated on said textile).

In a further embodiment, the shaped article comprises a support and a coating, preferably a top coating, wherein said coating consists of a porous material as defined herein.

In a further embodiment the invention relates to an article obtainable by or obtained by a method as described herein.

The present invention relates in a fifth aspect to uses / methods of use of the membranes, shaped articles and intermediates as described herein.

Membranes:
In one embodiment, the present invention relates to the use of a membrane as described herein in a filter device or as part of a woven or non-woven textile. The inventive membranes prove to be useful in a number of applications, including filter materials and textile materials. This aspect of the invention shall be explained in further detail below. The inventive membranes are self-supporting ("free standing"). Therefore, they distinguish from known membranes of similar thickness and porosity on a support. However, the inventive material is suitable for coating an appropriate support. The possibility of manufacturing such membrane independent from a specific support makes it very versatile.

The inventive membranes may be used in micro-filtration, ultrafiltration and / or nanofiltration, e.g. by using known methods. Microfiltration is used to separate particles of 100-1000 nm, such as bacteria; ultrafiltration is used to separate particles of 10-100 nm, such as viruses, proteins and colloids; nanofiltration is used to separate particles of 1-10 nm, such as salts, pesticides, sugars.

Shaped Articles:
In general, the inventive shaped articles retain the beneficial properties of the polymer membranes as defined herein and are thus suitable for all uses that are applicable to such membranes; this particularly includes the uses as disclosed herein, such as microfiltration, ultrafiltration, nanofiltration (e.g sterile filtration or viral filtration or concentration of biological molecules (e.g. proteins)).

In a further embodiment, the present invention relates to the use of an article, as defined herein (i) in a filter; (ii) in a textile material.

Intermediates / Starting Materials:
The inventive intermediates may be used in a process for manufacturing a membrane as described herein.

To further illustrate the invention, the following examples are provided. These examples are provided with no intent to limit the scope of the invention.

### I. Preparation of starting materials

The preparation of the salt nanoparticles is described in W02005/087660. The synthesis of calcium carbonate (denoted as CaCO₃), barium carbonate (denoted as BaCO₃), strontium carbonate (denoted as SrCO₃), potassium carbonate (denoted as K₂CO₃) and sodium carbonate (denoted as Na₂CO₃) nanoparticles is shortly described below; an FSP apparatus as described in W02005/087660 is used.
a) Preparation of CaCO₃ nanoparticles: Ca-2-Ethylhexanoate in 2-ethylhexanoic acid (Molekula) was diluted with tetrahydrofurane (THF) to a final Ca content of 3.9wt%. This precursor is fed (9ml/min, HNP Mikrosysteme, micro annular gear pump mzr-2900) to a spray nozzle,dispersed by oxygen (9l/min, PanGas Tech.) and ignited by a premixed methane-oxygen flame (CH₄, 1.2l/min; O₂, 2.2l/min). The off-gas is filtered through a glass fiber filter (Whatman Ltd., USA) by a vacuum pump (Busch S.A., Switzerland). The resulting powder is collected on the glass fiber filter and removed by a spatula.
b) Preparation of BaCO₃ nanoparticles: Ba-2-Ethylhexanoate in 2-ethylhexanoic acid (AlfaAesar) was diluted with tetrahydrofurane (THF) to a final Ba content of 4.6wt%. The precursor is fed (5ml/min, HNP Mikrosysteme, micro annular gear pump mzr-2900) to a spray nozzle, dispersed by oxygen (5l/min, PanGas Tech.) and ignited by a premixed methane-oxygen flame (CH₄, 1.2l/min; O₂, 2.21/min). The off-gas is filtered through a glass fiber filter (Whatman Ltd., USA) by a vacuum pump (Busch S.A., Switzerland). The resulting powder is collected on the glass fiber filter and removed by a spatula.
c) Preparation of SrCO₃ nanoparticles: Sr-2-Ethylhexanoate in 2-ethylhexanoic acid (Strem Chemicals) was diluted with tetrahydrofurane (THF) to a final Sr content of 4.7wt%. The precursor is fed (5ml/min, HNP Mikrosysteme, micro annular gear pump mzr-2900) to a spray nozzle, dispersed by oxygen (51/min, PanGas Tech.) and ignited by a premixed methane-oxygen flame (CH₄, 1.2l/min; O₂, 2.2l/min). The off-gas is filtered through a glass fiber filter (Whatman Ltd., USA) by a vacuum pump (Busch S.A., Switzerland). The resulting powder is collected on the glass fiber filter and removed by a spatula.
d) Preparation of K₂CO₃ nanoparticles: 20wt% of K-2-Ethylhexanoate (AlfaAesar) was dissolved in 2-ethylhexanoic acid and further diluted with tetrahydrofurane (THF) to a final K content of 3.5wt%. The precursor is fed (5ml/min, HNP Mikrosysteme, micro annular gear pump mzr-2900) to a spray nozzle, dispersed by oxygen (5l/min, PanGas Tech.) and ignited by a premixed methane-oxygen flame (CH₄, 1.2l/min; O₂, 2.2l/min). The off-gas is filtered through a glass fiber filter (Whatman Ltd., USA) by a vacuum pump (Busch S.A., Switzerland). The resulting powder is collected on the glass fiber filter and removed by a spatula.
e) Preparation of Na₂CO₃ nanoparticles: 20wt% of Na-2-Ethylhexanoate (Aldrich Fine Chemicals) was dissolved in 2-ethylhexanoic acid and further diluted with tetrahydrofurane (THF) to a final Na content of 2.4wt%. The precursor is fed (5ml/min, HNP Mikrosysteme, micro annular gear pump mzr-2900) to a spray nozzle, dispersed by oxygen (51/min, PanGas Tech.) and ignited by a premixed methane-oxygen flame (CH₄, 1.2l/min; O₂, 2.2l/min). The off-gas is filtered through a glass fiber filter (Whatman Ltd., USA) by a vacuum pump (Busch S.A., Switzerland). The resulting powder is collected on the glass fiber filter and removed by a spatula.

### II. Preparation of polymer membranes.

Polymer membranes are generally produced in a multiple step process (see figure 1):
Step a) A dispersion is prepared consisting of a soluble polymer (pre-dissolved in an appropriate solvent) and metal salt nanoparticles. This dispersion is achieved by manual mixing of the components and further ultra-sonication in order to obtain well dispersed salt nanoparticles.
Step b) The dispersion is applied on a substrate (e.g. glass) using spin coating or roll coating and dried afterwards. Optionally, a heating step can be applied for faster drying of the applied films (evaporation of the solvent; step c)).
Step e) The template salt nanoparticles are removed (dissolved) from the polymer matrix using a suitable acid to reveal the porous structure. The film is then washed in de-ionized water and ethanol and dried on air.
   Specific preparation procedures for polymer membranes using different polymers, salts and solvents are given below and summarized in table 1.

### a) Porous polysulfone membranes (porous PSU membranes)

### a1) PSU dissolved in dichloromethane (denoted as DM)

PSU (Dolder AG, Udel P-1700) dissolved in DM (J.T. Baker, NL) is mixed with either CaCO₃, K₂CO₃ or Na₂CO₃ nanoparticles. The weight ratio of polymer to salt is 52.5% to 47.5%. The weight ratio of polymer/salt to solvent is 6% to 94%. This mixture is sonicated (Hielscher ultrasonics, UP400s) for 1 minute at 400W to disperse the nanoparticles. The dispersion is then applied on a glass substrate using spin-coating (Laurell Technologies Corp., WS-650SZ) or roll-coating (Zehntner GmbH, ZAA 2300) to achieve films of uniform thickness. For spin-coating, a drop of approximately 500µl is pipetted on the substrate and then spinned for 10 seconds at 1000rpm and acceleration of 1000rpm/s. For roll-coating, the coating knife has 50µm slots, forward speed is set to 18mm/s. 1ml of dispersion was used to create a film of approximately 10 x 10cm² area. Finally, the salt nanoparticles are dissolved in 1M hydrochloric acid (denoted as HCl) for 3 minutes to reveal the porous structure. The film is then washed in de-ionized water (Millipore, electrical resistivity > 18MΩcm) and ethanol and dried on air for 2 hours.

### a2) PSU dissolved in dimethylacetamide (denoted as DMAC)

PSU (Dolder AG, Udel P-1700) dissolved in DMAC (Fluka, CH) is mixed with SrCO₃ nanoparticles. The weight ratio of polymer to salt is 40.0% to 60.0%. The weight ratio of polymer/salt to solvent is 20.0% to 80.0%. This mixture is sonicated (Hielscher ultrasonics, UP400s) for 1 minute at 400W to disperse the nanoparticles. The dispersion is then applied on a glass substrate using spin-coating (Laurell Technologies Corp., WS-650SZ) or roll-coating (Zehntner GmbH, ZAA 2300) to achieve films of uniform thickness. For spin-coating, a drop of approximately 500µl is pipetted on the substrate and then spinned for 30 seconds at 1000rpm and acceleration of 1000rpm/s. For roll-coating, the coating knife has 50µm slots, forward speed is set to 18mm/s. 1ml of dispersion was used to create a film of approximately 10 x 10cm² area. Subsequent heating for 1 minute at 120°C in an ordinary lab oven (Memmert GmbH) is necessary for the quick evaporation of remaining solvent. Finally, the salt nanoparticles are dissolved in 1M hydrochloric acid (denoted as HCl) for 3 minutes to reveal the porous structure. The film is then washed thoroughly in de-ionized water (Millipore, electrical resistivity > 18MΩcm) and ethanol and dried on air for 2 hours.

### b) Porous polyethersulfone membranes (porous PES membranes)

### b1) PES dissolved in DMAC

PES (Dolder AG, Veradel A-201) dissolved in DMAC (Fluka, CH) is mixed with either BaCO₃ or SrCO₃ nanoparticles. The weight ratio of polymer to BaCO₃ is 20.0% to 80.0%. The weight ratio of polymer/ BaCO₃ to solvent is 40% to 60%. The weight ratio of polymer to SrCO₃ is 40.0% to 60.0%. The weight ratio of polymer/SrCO₃ to solvent is 20% to 80%. These mixtures are sonicated (Hielscher ultrasonics, UP400s) for 1 minute at 400W to disperse the nanoparticles. The dispersions are then applied on glass substrates using spin-coating (Laurell Technologies Corp., WS-650SZ) or roll-coating (Zehntner GmbH, ZAA 2300) to achieve films of uniform thickness. For spin-coating, a drop of approximately 500µl is pipetted on the substrate and then spinned for 30 seconds at 1000rpm and acceleration of 1000rpm/s. For roll-coating, the coating knife has 50µm slots, forward speed is set to 18mm/s. 1ml of dispersion was used to create a film of approximately 10 x 10cm² area. Subsequent heating for 1 minute at 120°C in an ordinary lab oven (Memmert GmbH) is necessary for the quick evaporation of remaining solvent. Finally, the salt nanoparticles are dissolved in 1M hydrochloric acid (denoted as HCl) for 3 minutes to reveal the porous structure. The film is then washed thoroughly in de-ionized water (Millipore, electrical resistivity > 18MΩcm) and ethanol and dried on air for 2 hours.

### b2) PES dissolved in dimethylsulfoxide (denoted as DMSO)

PES (Dolder AG, Veradel A-201) dissolved in DMSO (Fluka, CH) is mixed with CaCO₃ nanoparticles. The weight ratio of polymer to salt is 52.5% to 47.5%. The weight ratio of polymer/salt to solvent is 6.0% to 94.0%. This mixture is sonicated (Hielscher ultrasonics, UP400s) for 1 minute at 400W to disperse the nanoparticles. The dispersion is then applied on a glass substrate using spin-coating (Laurell Technologies Corp., WS-650SZ) or roll-coating (Zehntner GmbH, ZAA 2300) to achieve films of uniform thickness. For spin-coating, a drop of approximately 500µl is pipetted on the substrate and then spinned for 1 minute at 1000rpm and acceleration of 1000rpm/s. For roll-coating, the coating knife has 50µm slots, forward speed is set to 18mm/s. 1ml of dispersion was used to create a film of approximately 10 x 10cm² area. Subsequent heating for 1 minute at 120°C in an ordinary lab oven (Memmert GmbII) is necessary for the quick evaporation of remaining solvent. Finally, the salt nanoparticles are dissolved in 1M hydrochloric acid (denoted as HCl) for 3 minutes to reveal the porous structure. The film is then washed thoroughly in de-ionized water (Millipore, electrical resistivity > 18MΩcm) and ethanol and dried on air for 2 hours.

### c) Porous polycarbonate membrane (porous PC membranes)

PC (Bayer Material Science, Makrolon OD2015) dissolved in DM (J.T. Baker, NL) is mixed with CaCO₃ nanoparticles. The weight ratio of polymer to salt is 52.5% to 47.5%. The weight ratio of polymer/salt to solvent is 6% to 94%. This mixture is sonicated (Hielscher ultrasonics, UP400s) for 1 minute at 400W to disperse the nanoparticles. The dispersion is then applied on a glass substrate using spin-coating (Laurell Technologies Corp., WS-650SZ) or roll-coating (Zehntner GmbH, ZAA 2300) to achieve films of uniform thickness. For spin-coating, a drop of approximately 500µl is pipetted on the substrate and then spinned for 10 seconds at 1000rpm and acceleration of 1000rpm/s. For roll-coating, the coating knife has 50µm slots, forward speed is set to 18mm/s. 1ml of dispersion was used to create a film of approximately 10 x 10cm² area. Finally, the salt nanoparticles are dissolved in 1M hydrochloric acid (denoted as HCl) for 3 minutes to reveal the porous structure. The film is then washed in de-ionized water (Millipore, electrical resistivity > 18MΩcm) and ethanol and dried on air for 2 hours.

### d) Porous urea-polydimethylsiloxane membrane (porous urea-PDMS membrane)

Urea-PDMS (Wacker Chemie AG, Geniomer 200) dissolved in 2-Propanol (Fluka, CH) is mixed with CaCO₃ nanoparticles. The weight ratio of polymer to salt is 52.5% to 47.5%. The weight ratio of polymer/salt to solvent is 6% to 94%. This mixture is sonicated (Hielscher ultrasonics, UP400s) for 1 minute at 400W to disperse the nanoparticles. The dispersion is then applied on a glass substrate using spin-coating (Laurell Technologies Corp., WS-650SZ) or roll-coating (Zehntner GmbH, ZAA 2300) to achieve films of uniform thickness. For spin-coating, drops of approximately 500µl are pipetted on the substrate and then spinned for 10 seconds at 1000rpm and acceleration of 1000rpm/s. For roll-coating, the coating knife has 50µm slots, forward speed is set to 18mm/s. 1ml of dispersion was used to create a film of approximately 10 x 10cm² area. Finally, the salt nanoparticles are dissolved in 1M hydrochloric acid (denoted as HCl) for 3 minutes to reveal the porous structure. The film is then washed in de-ionized water (Millipore, electrical resistivity > 18MΩcm) and ethanol and dried on air for 2 hours.

**table 1: Summary of membrane preparation specifications:**

| ex. | Polymer | Salt- | solv. | NP size* | Polymer:salt | Polymer/salt : |
|---|---|---|---|---|---|---|
| | | NP | | [nm] | [wt%] | solv. [wt%] |
| a1) | PSU | CaCO₃ | DM | 40 | 52.5:97.5 | 6.0:94.0 |
| a1) | PSU | K₂CO₃ | DM | 30 | 52.5:97.5 | 6.0:94.0 |
| a1) | PSU | Na₂CO₃ | DM | 30 | 52.5:47.5 | 6.0:94.0 |
| a2) | PSU | SrCO₃ | DMAC | 15 | 40.0:60.0 | 20.0:80.0 |
| b1) | PES | BaCO₃ | DMAC | 15 | 20.0:80.0 | 40.0:60.0 |
| b1) | PES | SrCO₃ | DMAC | 15 | 40.0:60.0 | 20.0:80.0 |
| b2) | PES | CaCO₃ | DMSO | 40 | 52.5:47.5 | 6.0:94.0 |
| c) | PC | CaCO₃ | DM | 40 | 52.5:47.5 | 6.0:99.0 |
| d) | Urea-PDMS | CaCO₃ | ⁱPrOH | 40 | 52.5:47.5 | 6.0:94.0 |

| | | | | | | |
|---|---|---|---|---|---|---|
| *NP size: Mean nanoparticles crystallite size, determined by X-ray diffraction | | | | | | |

### III. Dextran rejection profile test.

The practicability of the hereby described membranes for filtration purposes has been tested on the PSU membrane (example a 1, CaCO₃ as template nanoparticles). For this purpose, a dextran rejection test has been implemented to determine the molecular weight cut-off (denoted as MWCO, for details see: G. Tkacik, S. Michaels, Nature Biotechnology. 9:941-946, 1991). For example, a membrane capable of rejecting at least 90% of a macromolecule of 1000kDa can be classified to have a MWCO of 1000kDA. A 0.1wt% mixture of different dextran standards (5kDa, 25kDa, 80kDa, 150kDa, 270kDa, 410kDa, 670kDa, 1400kDa) (Fluka, CH) was prepared in 0.1M sodium nitrate (denoted as NaNO₃) buffer solution. The individual standards were mixed in equal amounts. The mixture was filtered (direct flow) through the membrane using a high vacuum pump (Edwards Vacuum Ltd). The permeate and the mixture were compared using gel permeation chromatography.

The PSU membrane of ex a1 (table 1) based on CaCO3 showed a minimal rejection of 95% for the 1400kDa dextran standard molecules. The MWCO for the tested membrane can therefore be classified as 1400kDa. This MWCO was proven several times which indicates that the membrane fabrication process is stable and reproducible.

## Claims

1. A method of manufacturing a porous polymer membrane (1) having a pore size of 5-400 nm, comprising the steps of
a) providing a dispersion (5) comprising
• one or more diluents in an amount of at least 50wt.%,
• one or more polymers dissolved therein,
• one or more metal salt nanoparticles dispersed therein,
• optionally one or more additives dissolved therein
whereby the ratio of polymer : nanoparticles is in the range of 2:1 to 1:5;
b) coating a substrate (6) with said dispersion (5);
c) optionally subjecting the obtained material (4) to a drying step;
d) optionally subjecting the thus obtained material to a polymerisation or cross-linking step;
e) removing said one or more metal salt particles by a dissolution step;
f) optionally removing the obtained polymer membrane from said supporting material (6).

2. The method of claim 1, wherein said method does not involve a phase separation step.

3. The method according to any of the preceding claims, wherein said step (f) is performed prior to step (e).

4. The method according to any of the preceding claims, wherein one or more of steps a) to f), preferably all steps a) to f), are performed continuously.

5. The method according to claim 1, wherein said metal salt particles are selected from the group consisting of metal carbonates and metal hydrogencarbonates.

6. The method according to any of the preceding claims, wherein said diluents are selected from the group consisting of organic solvents with a b.p. below 200°C.

7. The method according to any of the preceding claims, wherein said polymers are amorphous polymers.

8. The method according to any of the preceding claims,
wherein said polymers are selected from the group consisting of polysulfones, polyethersulfones, polycarbonates, polystyrenes, polyacrylates, polysiloxanes, polyarylates, and polyurethanes; or
wherein said polymer is selected from the group consisting of oligomers that can be polymerized or polymers that can be cross-linked.

9. The method according to any of the preceding claims,
a) wherein said polymer membrane
• has a thickness of 50nm - 50'000nm and/or
• has a porosity of 10vol% - 90vol% and/or
• has a pore size of 5nm - 400nm;
and / or
b) wherein said metal salt particles
• have a particle size of 5nm - 400nm and/or
• are made by a dry process, particularly by an FSP process;
and / or
c) wherein said dispersion contains
• from 50 to 99 wt.-% diluents
• from 1 to 20 wt.-% polymers
• from 0.5 to 40 wt.-% metal salt particles
• from 0 to 5 wt.-% additives;
and / or
d) wherein said supporting material is selected from the group consisting of crystalline polymers, semi-crystalline polymers, metals, ceramics and glasses.

10. The method according to any of the preceding claims,
a) wherein said coating step (b) is selected from the group consisting of spraying, roll-to-roll processes, dip-coating;
and / or
b) wherein said dissolution step (e) is performed in 5 min or less.

11. A dispersion (5) comprising
• 50 to 99 wt.-% diluents, preferably selected from the group consisting of alcoholes, ethers, ketones, esters, sulfoxides, amides, pyrrolidones, lactames, halogenalkanes, alkanes, and cycloalkanes;
• 1 to 20 wt.-% polymers, preferably selected from the group consisting of polysulfones, polyethersulfones, polycarbonates, polystyrenes, polyacrylates, polysiloxanes, polyarylates, and polyurethanes; and
• 0.5 to 40 wt.-% metal salt nanoparticles, preferably selected from the group consisting of metal carbonates and metal hydrogencarbonates;
• 0 to 5 wt.-% of additives, preferably no additives.

12. A kit of parts for manufacturing a dispersion according to claim 11.

13. A polymer membrane (1) **characterized in that**
a) it is obtainable by, or obtained by, a process according to any of claims 1 to 10 and / or
b) it has
• a thickness d of 50nm - 50'000nm and/or
• pores with a diameter between 5 - 400 nm and/or
• a porosity of 10vol% - 90vol% and/or

14. A shaped article comprising a polymer membrane according to claim 13, particularly selected from the group consisting of
a) filters (preferably wherein said membrane is supported or unsupported);
b) woven or non-woven textiles (preferably wherein said membrane is laminated on said textile).

15. Use of a dispersion according to claim 11 or a kit according to claim 12 in a method of manufacturing a porous polymer membrane, particularly in a method of manufacturing a porous polymer membrane according to any of claims 1 to 10.
